# EUROPEAN PATENT APPLICATION

(11) **EP 4 592 062 A1**
(43) Date of publication of application: **30.07.2025**
(21) Application number: 22959568.1
(22) Date of filing: 22.09.2022
(51) Int. Cl.: B29C 64/386

(54) **PRINTING DEVICE, PRINTING SYSTEM, AND METHOD FOR CONTROLLING PRINTING DEVICE**

(71) Applicant: Fuji Corporation, Chiryu-shi, Aichi 472-8686 (JP)
(72) Inventor: WATANABE, Kenji, Chiryu-shi, Aichi 472-8686 (JP)
(74) Representative: Grünecker Patent- und Rechtsanwälte PartG mbB
(86) International application number: PCT/JP2022/035398
(87) International publication number: WO 2024/062604

(57) **Abstract**

A printing device of the present disclosure is used in a printing system including a host device configured to transmit information related to shaping of a three-dimensional object via an electric communication line and executes a three-dimensional shaping process. The printing device includes a discharge head configured to discharge a liquid material for shaping the three-dimensional object, and a printing control section configured to acquire, after the host device generates cross-sectional data of the three-dimensional object, intermediate data based on the cross-sectional data transferred from the host device, generate one or more pieces of print data based on one or more predetermined processes by using the acquired intermediate data, and cause the discharge head to execute the three-dimensional shaping process based on the generated print data.

## Description

### Technical Field

The present description discloses a printing device, a printing system, and a method for controlling a printing device.

### Background Art

Conventionally, as a printing device, there has been proposed a printing device in which a binder is applied to a predetermined region of a powder layer based on shape data, and a binding body of a powder material is formed by curing the binder, and thereafter, a process of applying a coloring agent based on color data is repeated subsequently, so that a colored three-dimensional shaped object is created (for example, refer to Patent Literature 1). In the device, a host device creates cross-sectional data, uses a color correction table to correct the color data in the cross-sectional data, and a three-dimensional shaping device subsequently receives the data to perform shaping.

### Citation List

### Patent Literature

Patent Literature 1:JP-A-2002-292748

### Summary of the Invention

### Technical Problem

In a printing system described in Patent Literature 1, print data used for three-dimensional shaping may be created by a host computer, and the printing device may perform a printing process using the print data. In such a printing system, for example, when more processes such as data correction is executed, more print data is generated, the host device is required to execute extensive processes, so that a transfer time thereof or the like is also extensive.

The present disclosure has been made to solve such a problem, and a main object thereof is to provide a printing device, a printing system, and a method for controlling a printing device with which it is possible to further increase efficiency and further shorten a process time.

The present disclosure employs the following means in order to achieve the main object described above.

A printing device disclosed in the present description is
a printing device for use in a printing system including a host device configured to transmit information related to shaping of a three-dimensional object via an electric communication line, the printing device being configured to execute a three-dimensional shaping process, the printing device includes:
a discharge head configured to discharge a liquid material for shaping the three-dimensional object; and
a printing control section configured to acquire, after the host device generates cross-sectional data of the three-dimensional object, intermediate data based on the cross-sectional data transmitted from the host device, generate one or more pieces of print data based on one or more predetermined processes by using the acquired intermediate data, and cause the discharge head to execute the three-dimensional shaping process based on the generated print data.

In the printing device, since the host device generates the intermediate data based on the cross-sectional data and the subsequent processes are executed on a side of the printing device, the transfer time of the print data and the like can be further shortened. In addition, in the printing device, since the process is shared, a load on the host device can be further reduced. Therefore, in the printing device, it is possible to further increase the efficiency and further shorten the process time.

### Brief Description of Drawings

Fig. 1 shows a schematic diagram illustrating an example of production system 10.
Fig. 2 shows a schematic diagram illustrating an example of three-dimensional printer 11.
Fig. 3 shows a diagram illustrating an example of a schematic configuration of pallet 50.
Fig. 4 shows a flowchart illustrating an example of a printing process routine.
Fig. 5 shows a flowchart illustrating an example of a discharge inspection process routine.
Fig. 6 shows a flowchart illustrating an example of an intermediate data generation process routine.
Fig. 7 shows diagrams illustrating an example of an outline of a slice process.
Fig. 8 shows diagrams illustrating an example of an outline of a head division process.
Fig. 9 shows diagrams illustrating an example of an outline of a nozzle distribution process.
Fig. 10 shows diagrams illustrating an example of an outline of a block division process.
Fig. 11 shows a diagram illustrating an example of an outline of a nozzle omission correction process.
Fig. 12 shows a diagram illustrating an example of image data generated by each predetermined process.
Fig. 13 shows diagrams illustrating an example of passage of time from generation of print data to a printing process.

### Description of Embodiments

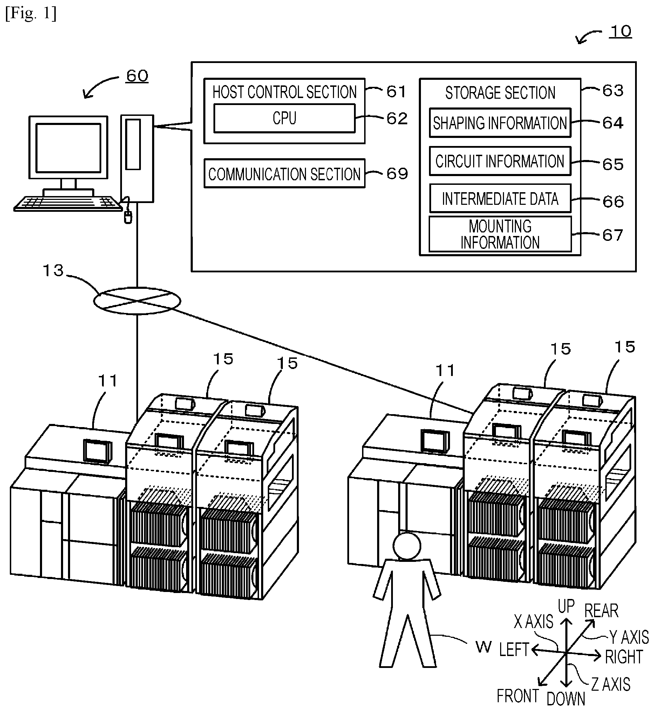

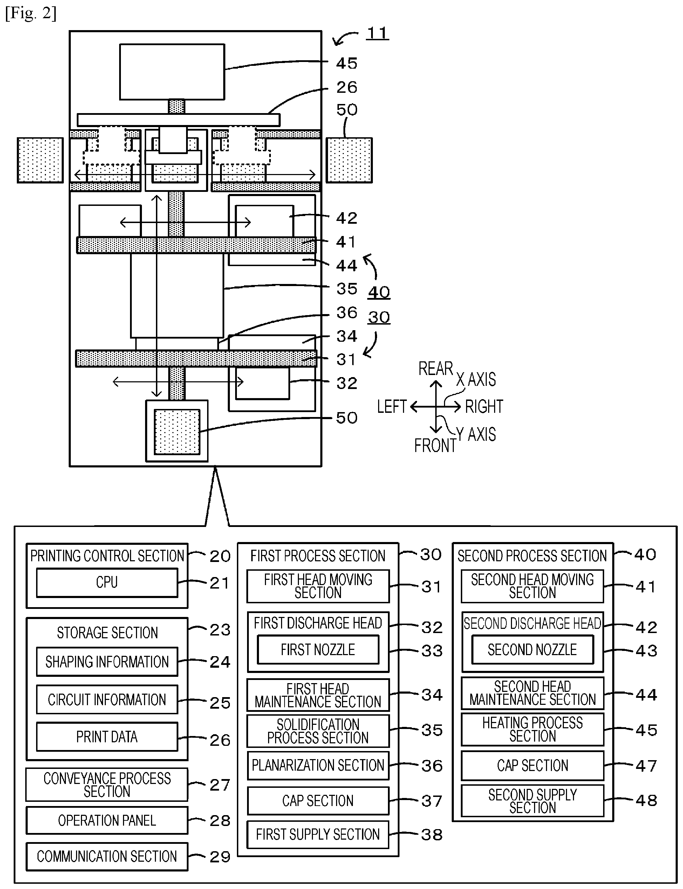

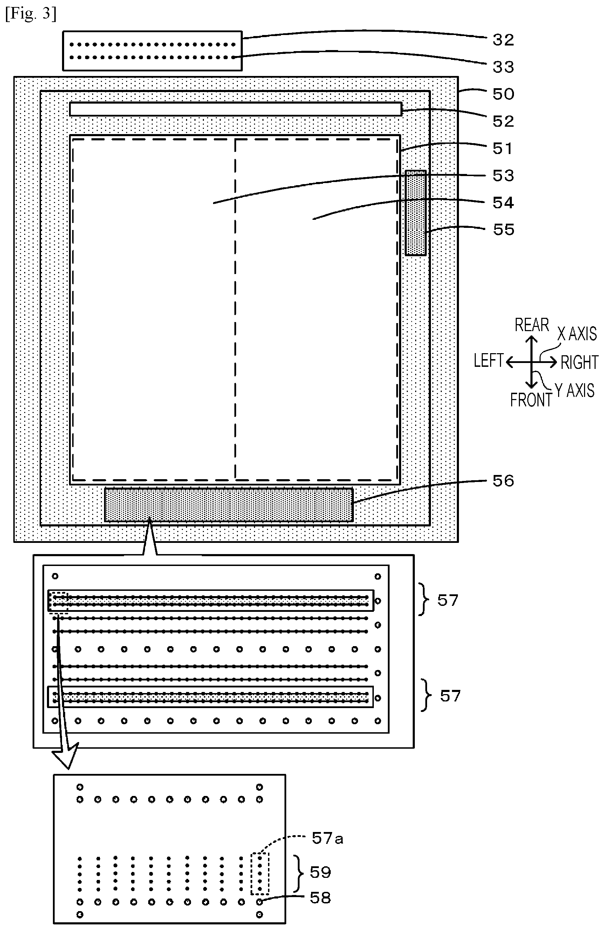

The present embodiment will be described with reference to the drawings. Fig. 1 is a schematic diagram illustrating an example of production system 10 including three-dimensional printer 11 as an example of the present disclosure. Fig. 2 is a schematic diagram illustrating an example of three-dimensional printer 11. Fig. 3 is a diagram illustrating an example of a schematic configuration of pallet 50. In the present embodiment, a left-right direction (X axis), a front-rear direction (Y axis), and an up-down direction (Z axis) are as illustrated in Figs. 1 to 3.

Production system 10 is configured as a production line in which three-dimensional printer 11 shapes a three-dimensional object as a first process, forms a predetermined member on the three-dimensional object as a second process, and then mounting device 15 mounts a component. Production system 10 includes a printing system including three-dimensional printer 11 and host device 60, and mounting device 15. Three-dimensional printer 11 may form a circuit pattern as the second process, and mounting device 15 may execute a process of mounting a component at a predetermined position of the circuit pattern. Production system 10 may include only three-dimensional printer 11 and host device 60 without including mounting device 15, or may include, in addition to mounting device 15, one or more mounting-related devices among a printing device that prints solder as viscous fluid on the three-dimensional object, a printing inspection device that inspects a printing result, a mounting inspection device that inspects a mounting result, a conveyance device that conveys the shaped three-dimensional object, a reflow device that performs a reflow process, and the like. In production system 10 illustrated in Fig. 1, two groups of three-dimensional printer 11 and mounting device 15 are provided, but one group may be provided, or three groups may be provided. In Fig. 1, production system 10 includes two mounting devices 15, but production system 10 may include three or more mounting devices 15 or may include one mounting device 15. Mounting device 15 is a device that mounts a component on the three-dimensional object shaped by three-dimensional printer 11.

Three-dimensional printer 11 is a three-dimensional shaping device for shaping the three-dimensional object. A material for shaping is not particularly limited, and examples thereof include resins and ceramics. As illustrated in Fig. 2, three-dimensional printer 11 includes printing control section 20, storage section 23, conveyance process section 27, operation panel 28, communication section 29, first process section 30, and second process section 40. Here, a description will be mainly given of a configuration in which three-dimensional printer 11 shapes a board as a base material of the three-dimensional object with first process section 30, and executes a process of forming a circuit pattern on the shaped board with second process section 40.

Printing control section 20 is configured as a microprocessor mainly including CPU 21, and controls entire three-dimensional printer 11. Printing control section 20 exchanges information with storage section 23, conveyance process section 27, operation panel 28, communication section 29, first process section 30, and second process section 40. Storage section 23 is a large-capacity storage medium, and includes, for example, an HDD or a flash memory. Storage section 23 stores shaping information 24, circuit information 25, print data 26, and the like. Shaping information 24 includes information on a shape, a size, and the like of the three-dimensional object to be manufactured. Circuit information 25 includes information on a circuit pattern to be formed in the three-dimensional object shape and the like. Print data 26 is data used when a liquid material is discharged from first discharge head 32 or second discharge head 42, and is generated from shaping information 24 or circuit information 25 through a predetermined process based on a state of first process section 30, second process section 40, or the like. The predetermined process is described later in detail, and examples thereof include a block division process, a nozzle distribution process, and a nozzle omission correction process. The block division process is a process of block-dividing print data of print request resolution into print data of head print resolution. The nozzle distribution process is a process of distributing nozzles to be used to reduce an in-plane variation in print quality. The nozzle omission correction process is a process of causing a substitute nozzle to discharge the liquid material to a position where the liquid material is not discharged because of presence of a discharge failure nozzle. Three-dimensional printer 11 executes a three-dimensional shaping process based on the information stored in storage section 23.

Conveyance process section 27 executes a process of moving and fixing pallet 50 on which a product is placed. As illustrated in Fig. 2, conveyance process section 27 grips pallet 50, moves pallet 50 in an X axis direction, and moves pallet 50 in a Y axis direction along a guide. Conveyance process section 27 scans pallet 50 in the Y axis direction also when a member is formed by first process section 30 and second process section 40. Operation panel 28 is a unit that receives an input from worker W and presents information to worker W. Operation panel 28 is disposed on a front surface of printing device 11 and includes a display section serving as a display, a touch-panel type operation section, and an operation section having a button. Communication section 29 is an interface used when communicating with an external device such as mounting device 15 and host device 60. Each device of production system 10 exchanges information via communication section 29.

First process section 30 is a shaping unit that shapes the three-dimensional object by discharging the liquid material to be solidified and then solidifying the liquid material. First process section 30 includes first head moving section 31, first discharge head 32, first head maintenance section 34, solidification process section 35, planarization section 36, cap section 37, and first supply section 38. First head moving section 31 includes a slider that moves along the X axis direction by being guided by a guide rail, and a motor that drives the slider. First discharge head 32 is mounted on the slider, and first discharge head 32 moves along the X axis direction as the slider moves. First discharge head 32 is a shaping head that discharges the liquid material to shape the three-dimensional object. First nozzle 33 that discharges the liquid material is formed on a lower surface of first discharge head 32. Examples of the liquid material discharged by first nozzle 33 include a liquid curable resin (such as an ultraviolet curable resin, a thermosetting resin, or a two-liquid mixed curable resin), a thermoplastic resin, and a slurry obtained by mixing a solid material such as an inorganic material with a solvent.

First discharge head 32 is a shaping head that discharges the liquid material to be solidified to pallet 50 as a target object. First discharge head 32 is connected to first supply section 38 and receives supply of the liquid material from first supply section 38. First discharge head 32 includes first nozzle 33 and a discharge drive section. First nozzle 33 is an opening hole for discharging the liquid material supplied from first supply section 38 to pallet 50. First nozzle 33 is formed on a nozzle plate disposed on a lower surface side of first discharge head 32 at a predetermined interval. The discharge drive section discharges, for example, the liquid material to pallet 50, and examples thereof include a piezoelectric element. The discharge drive section is disposed in each first nozzle 33 and is driven based on a signal from printing control section 20. First supply section 38 includes a supply tank that accommodates the liquid material, a waste liquid tank, and a flow path that is connected to the tanks and causes the liquid material to flow through first discharge head 32.

First head maintenance section 34 is a unit that inspects a discharge state of first discharge head 32 and performs discharge maintenance. First head maintenance section 34 performs maintenance of the discharge state of the liquid material from first nozzle 33, cleaning of first nozzle 33, and the like, for example. First head maintenance section 34 includes a discharge plate that receives the liquid material discharged from first discharge head 32, a wiping section that has a wiping sheet or the like as a cleaning member and wipes and cleans the vicinity of first nozzle 33, an imaging section that images the liquid material formed on pallet 50, and the like. Printing control section 20 uses first head maintenance section 34 to appropriately execute an inspection process and a cleaning process on a regular basis or in accordance with a degree of contamination of first discharge head 32.

Solidification process section 35 is a unit that performs a predetermined process on the liquid material discharged onto pallet 50 and solidifies the liquid material. When first discharge head 32 discharges a liquid ultraviolet curable resin, solidification process section 35 is a unit that emits ultraviolet lays. When first discharge head 32 discharges the liquid material that is solidified by drying and sintering, solidification process section 35 may be a unit that performs drying and sintering. In solidification process section 35, each time one layer of the three-dimensional object is formed on pallet 50 by first discharge head 32, pallet 50 is moved, and the three-dimensional object is accommodated and solidified. Planarization section 36 is a unit that planarizes the liquid material discharged onto pallet 50. For example, planarization section 36 may scan a planarization blade in the Y axis direction to planarize an outer shape of a discharge object. Cap section 37 is a unit that seals first nozzle 33 when first nozzle 33 is not used for a long period of time or when there is a predetermined blank time during the shaping.

Second process section 40 is a discharge unit that forms a predetermined material on a surface of the three-dimensional object solidified by first process section 30. Second process section 40 includes second head moving section 41, second discharge head 42, second head maintenance section 44, heating process section 45, cap section 47, and second supply section 48. Second head moving section 41 has the same mechanism as that of the slider, the motor, and the like of first head moving section 31, and a detailed description thereof is omitted. Second discharge head 42 is a forming head that discharges the liquid material to the three-dimensional object as a target object to form a circuit pattern or the like. Second nozzle 43 for discharging the liquid material is formed on a lower surface of second discharge head 42. Examples of the liquid material discharged from second nozzle 43 include a mixed liquid obtained by mixing a solid material with a solvent, a solution obtained by dissolving a resin in a solvent. Examples of the liquid material for forming the circuit pattern include a mixed liquid in which metal powder as a conductive material is dispersed in an organic solvent. Second discharge head 42 includes a discharge unit having a configuration similar to that of first discharge head 32 and second supply section 48, and a detailed description thereof is omitted.

Second head maintenance section 44 has a mechanism similar to the discharge plate and the wiping section of first head maintenance section 34, and a detailed description thereof is omitted. Heating process section 45 is a unit that performs a process of drying a solvent contained in the liquid material formed on the surface of the three-dimensional object. Heating process section 45 may accommodate and dry pallet 50 after all the circuit patterns are formed by second discharge head 42, or may accommodate and dry pallet 50 each time some of circuit patterns are formed by second discharge head 42. Cap section 47 has the same configuration as that of cap section 37 of first process section 30, and a detailed description thereof is omitted. The configurations of first discharge head 32 and second discharge head 42 are not limited to those described above, and may be changed as appropriate in accordance with intended use or desired specification. In the present embodiment, for convenience of description, first discharge head 32 and second discharge head 42 are collectively referred to simply as a discharge head, first nozzle 33 and second nozzle 43 are collectively referred to simply as a nozzle, and first process section 30 and second process section 40 are collectively referred to simply as a process section.

Pallet 50 is a plate-shaped member having a region for shaping the three-dimensional object. As illustrated in Fig. 3, pallet 50 includes three-dimensional shaping region 51, disposal region 52, sensor measurement region 55, and receiving member region 56. A removable transparent film is attached to an upper surface of pallet 50, and the next three-dimensional object can be manufactured by replacing the film. Three-dimensional shaping region 51 is a printing region in which the three-dimensional object is formed by first process section 30, and is a printing region in which a predetermined pattern is formed on the three-dimensional object by second process section 40. In three-dimensional printer 11, pallet 50 has three-dimensional shaping region 51 having a width longer than a length of a nozzle row of first discharge head 32, and a shaping process is executed by first discharge head 32 in multiple regions obtained by dividing the region. Three-dimensional shaping region 51 is divided into first region 53 having a left end portion as a reference position and second region 54 located on a right side of first region 53, and the shaping process is executed. Three-dimensional shaping region 51 may be undivided, or may be divided into three or more regions. Disposal region 52 is a region that receives an unnecessary liquid material discharged from first discharge head 32 and second discharge head 42. Sensor measurement region 55 is a region in which sensors of first process section 30 and second process section 40 are inspected. Receiving member region 56 is a region in which discharge inspection of first discharge head 32 and second discharge head 42 is performed. Discharge inspection region 57 of first discharge head 32 and discharge inspection region 57 of second discharge head 42 are formed in receiving member region 56. Fiducial mark 58 is formed in each discharge inspection region 57 according to a position where each nozzle is disposed. Printing control section 20 can receive discharge liquid material 59 discharged from the nozzles in alignment with fiducial mark 58 in discharge inspection region 57, and can detect discharge to a normal position according to whether the liquid material is discharged to allowable range 57a from a positional relationship with fiducial mark 58. Further, printing control section 20 can detect whether the liquid material is discharged in a normal amount from a relationship in terms of size between discharge liquid material 59 and fiducial mark 58.

Host device 60 is a computer that manages information of each device of production system 10. As illustrated in Fig. 1, host device 60 includes host control section 61, storage section 63, communication section 69, a display section, and an input device. Host control section 61 is configured as a microprocessor mainly including CPU 62, and controls the entire device. Storage section 63 is a device, such as HDD, that stores various data, such as a processing program. Storage section 63 stores shaping information 64, circuit information 65, intermediate data 66, mounting information 67, and the like. Shaping information 64 includes, for example, a database including shaping information 24 or the like used in each of three-dimensional printers 11. Circuit information 65 includes, for example, a database including circuit information 25 or the like used in each of three-dimensional printers 11. Intermediate data 66 is data that is obtained by performing a predetermined process on shaping information 64 and circuit information 65 and that is on the way to becoming print data 26. Examples of the predetermined process include the slice process and the head division process. The slice process is a process of generating cross-sectional data by slicing the three-dimensional object based on shaping information 24 to a predetermined thickness. The head division process is, for example, a process of generating head division data for executing the three-dimensional shaping process by the discharge head for each region when three-dimensional shaping region 51 is divided into two or more regions. Communication section 69 is an interface used when communicating with external devices such as three-dimensional printer 11 and mounting device 15 via network 13 as an electric communication line. The display section is a liquid crystal screen that displays various information. The input device includes a keyboard, a mouse, and the like used for a worker to input various commands.

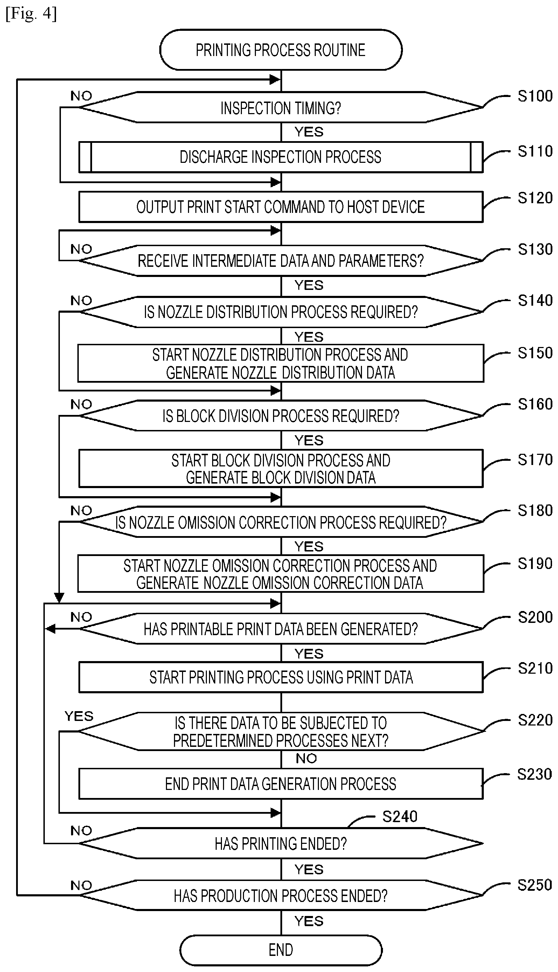

First, the three-dimensional shaping process of three-dimensional printer 11 configured as described above will be described. Fig. 4 is a flowchart illustrating an example of a printing process routine executed by CPU 21 of printing control section 20. The routine is stored in storage section 23 and is executed by printing control section 20 after an execution command of a production process is input from worker W. When the printing process routine is started, CPU 21 of printing control section 20 first determines whether it is an inspection timing of first process section 30 and second process section 40 (S100). The inspection timing may be, for example, a new production start time, a time when a predetermined number (for example, 5 or 10) of three-dimensional objects are produced, or a time when a predetermined time (for example, 4 hours or 8 hours) is elapsed. Here, as an example, it is assumed that the new production start time is set as the inspection timing. When it is the inspection timing in S100, CPU 21 executes a discharge inspection process of first discharge head 32 and/or second discharge head 42 (S110).

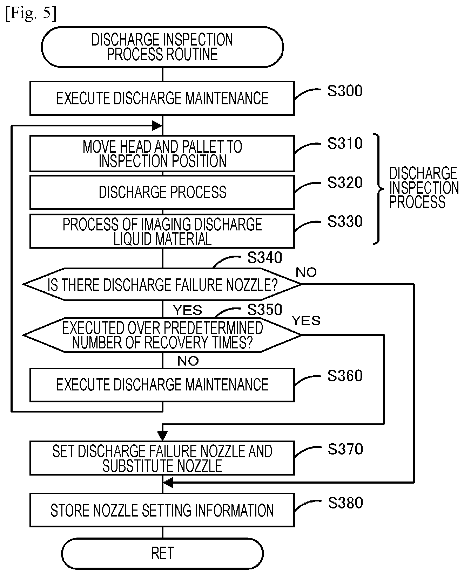

Fig. 5 is a flowchart illustrating an example of a discharge inspection process routine executed by CPU 21 of printing control section 20. The routine is stored in storage section 23 and is executed in S110 after three-dimensional printer 11 is activated. Here, for convenience of description, a discharge inspection process of first process section 30 is mainly described, and a discharge inspection process of second process section 40 is omitted, but the same inspection process as the following description can be executed also for second process section 40. When the routine is executed, CPU 21 first executes a discharge maintenance process (S300). The discharge maintenance process includes, for example, a purge process, a wiping process, a flushing process, and a flow process. The purge process is, for example, a process of forcibly supplying the liquid material from the supply tank of first supply section 38 and discharging the liquid material from first nozzle 33. The wiping process is, for example, a process of wiping the nozzle plate on which first nozzle 33 is formed and removing the adhered liquid material with the wiping section. The flushing process is a process of powerfully driving the discharge drive section of first discharge head 32 and forcibly discharging the liquid material from first nozzle 33. The flow process is a process of causing the liquid material to flow from the supply tank to the waste liquid tank via first discharge head 32. The discharge maintenance process includes the above-described processes, and one of the processes is selected according to a discharge abnormality of first nozzle 33. In S300, CPU 21 executes, for example, the purge process.

Next, CPU 21 executes the discharge inspection process (S310 to S320). In the discharge inspection process, for example, the liquid material is discharged from first discharge head 32 to receiving member region 56 of pallet 50, and an image captured by first head maintenance section 34 is subjected to image analysis to detect the discharge state of the liquid material from first nozzle 33. CPU 21 moves first discharge head 32 and pallet 50 to first head maintenance section 34 which is an inspection position (S310), causes a discharge process of discharging the liquid material to discharge inspection region 57 of pallet 50 to be executed multiple times (S320), and causes a process of imaging discharge liquid material 59 to be executed (S330). Examples of a discharge failure state include non-discharge, a discharge position deviation, a discharge amount (insufficient droplet diameter), satellite (excessive droplet diameter), and landing (flying) shape failure. Next, CPU 21 determines whether there is a discharge failure nozzle, from an analysis result of the captured image (S340). CPU 21 determines a nozzle having the above-described discharge state within a predetermined abnormal range as the discharge failure nozzle. The abnormal range can be experimentally determined based on a range in which a shape of the product does not satisfy an allowable range. The "discharge failure nozzle" may include one or more of a nozzle in which a discharge position of the liquid material exceeds predetermined allowable range 57a, a nozzle in which the discharge amount of the liquid material is less than a predetermined allowable amount, a nozzle in which the liquid material is not discharged, and the like.

When there is a discharge failure nozzle in S340, CPU 21 determines whether the discharge maintenance and the discharge inspection have been executed over the predetermined number of recovery times (S350). The number of recovery times may be experimentally determined, for example, to the number of times which can further recover the discharge failure, preferably multiple times or more, more preferably 2 to 5 times. Here, the number of recovery times is set to three. When the discharge maintenance process and the discharge inspection process are not executed by the predetermined number of recovery times in S350, CPU 21 executes the discharge maintenance (S360) and executes the processes of S310 and the subsequent steps. CPU 21 may execute a maintenance process in which maintenance intensity is increased in accordance with an increase in the number of recovery times. CPU 21 may change the discharge maintenance that is performed in an order of the purge process, the wiping process, and the flushing process, in S360, for example. The process order and a process type are not particularly limited, and the same process may be repeated, the process order may be appropriately changed, one or more processes may be omitted, or another process may be added. When there is a discharge failure nozzle even when the process is executed by the predetermined number of recovery times in S350, CPU 21 sets the corresponding nozzle as the discharge failure nozzle, and sets a nozzle other than the discharge failure nozzle as a substitute nozzle for the discharge failure nozzle (S370). For example, CPU 21 may set a nozzle adjacent to the discharge failure nozzle as a substitute nozzle. After S370 or when there is no discharge failure nozzle in S340, CPU 21 causes storage section 23 to store nozzle setting information including information related to a dischargeable nozzle, the discharge failure nozzle, and a position of a substitute nozzle (S380), and ends the routine. In this manner, printing control section 20 can obtain information on the state of first discharge head 32 before executing the three-dimensional shaping process.

After the discharge inspection process is executed in S 110 of the printing process routine, or when it is not the inspection timing in S100, CPU 21 outputs a print start command to host device 60 (S120). In production system 10, host device 60 is set to execute a process of generating intermediate data 66 of print data 26. Conventionally, host device 60 generates print data 26, but since a waiting time until the start of printing is long, production system 10 shares generation of print data 26 with printing control section 20.

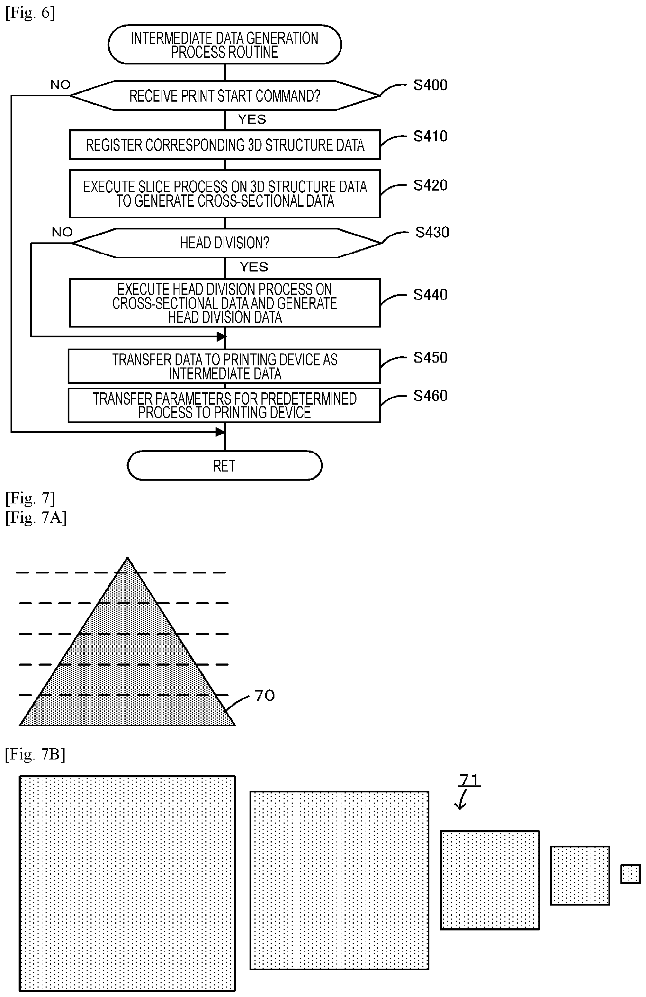

Fig. 6 is a flowchart illustrating an example of an intermediate data generation process routine executed by host control section 61 of host device 60. The routine is stored in storage section 63, and is executed at predetermined intervals by host control section 61 after host device 60 is activated. When the intermediate data generation process routine is started, CPU 62 of host control section 61 first determines whether the print start command is received from three-dimensional printer 11 (S400), and ends the routine without further actions when the print start command is not received. On the other hand, when the print start command is received, CPU 62 reads shaping information 64 corresponding to the print start command and registers 3D structure data (S410).

Next, CPU 62 executes the slice process on the registered 3D structure data to generate the cross-sectional data (S420). Figs. 7A and 7B are diagrams illustrating an example of an outline of the slice process, Fig. 7A is a diagram of three-dimensional object data 70, and Fig. 7B is a diagram of cross-sectional data 71 obtained by slicing three-dimensional object data 70. As illustrated in Figs. 7A and 7B, host control section 61 generates multiple pieces of cross-sectional data 71 obtained by slicing three-dimensional object data 70 to a predetermined thickness. Cross-sectional data 71 may be, for example, image data. The thickness to which the data is sliced may be determined based on the head print resolution of first discharge head 32. Pixel resolution of cross-sectional data 71 may be set to the print request resolution (for example, 600 DPI in an X direction and 600 DPI in a Y direction).

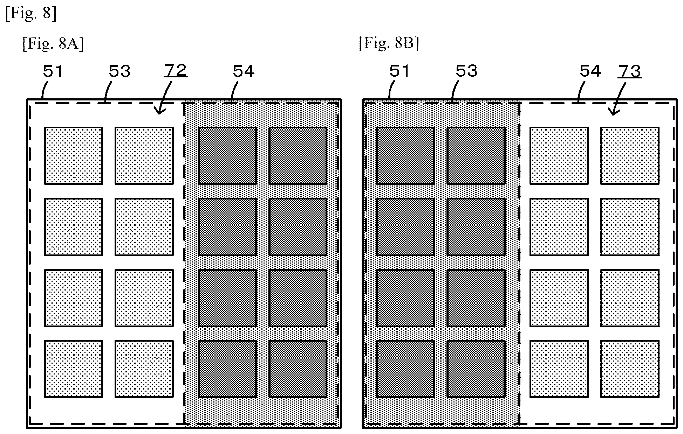

After S420, CPU 62 determines whether the head division process is required (S430). CPU 62 can perform the determination based on whether the target object to be three-dimensionally shaped extends over first region 53 and second region 54. When the head division process is required, CPU 62 executes the head division process on each of pieces of cross-sectional data 71 generated by slicing, and generates the head division data (S440). Figs. 8A and 8B are diagrams illustrating an example of an outline of the head division process, Fig. 8A is a diagram of head division data 72 of first region 53, and Fig. 8B is a diagram of head division data 73 of second region 54. As illustrated in Figs. 8A and 8B, host control section 61 generates two pieces of head division data since three-dimensional shaping region 51 is divided into two regions.

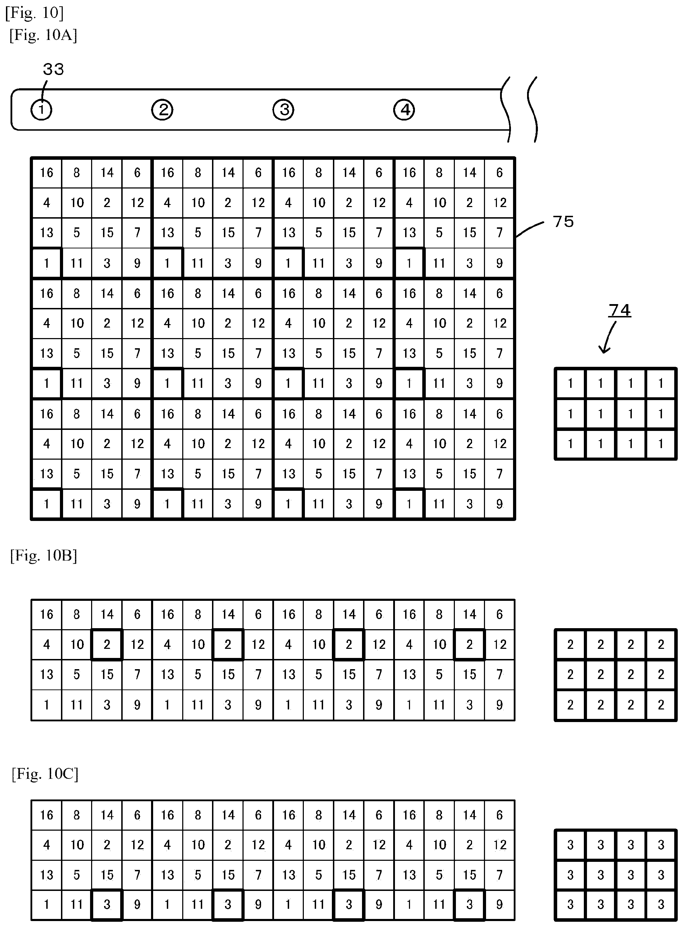

After S440 or when the head division process is not required in S430, CPU 62 transfers the generated data to three-dimensional printer 11 as the intermediate data for creating the print data (S450). The intermediate data is any one of cross-sectional data 71 itself or data obtained by executing the head division process on cross-sectional data 71. Then, CPU 62 transfers parameters required for generating the subsequent print data to three-dimensional printer 11 (S460), and ends the routine. The parameters to be transferred include, for example, the number of divisions, a discharge order, a discharge position, and the like of block 75 (refer to Figs. 10A to 10C) required for the block division process. In host device 60, since only the slice process and the head division process are executed, it is possible to quickly generate a print image and execute a transfer process.

After outputting the print start command in S120 of the printing process routine, CPU 21 determines whether the intermediate data and the parameters are received from host device 60 (S130), and waits without further actions when the intermediate data is not received. On the other hand, when the intermediate data is received, CPU 21 determines whether the nozzle distribution process is required based on a discharge inspection result (S140). For example, CPU 21 may determine that the nozzle distribution process is required when a predetermined ratio of nozzles whose discharge amount is in a predetermined low discharge amount range are included. The low discharge amount range or the predetermined ratio can be set to a range obtained, for example, by experimentally determining whether there is irregularities that cause defects in forming the three-dimensional object when the printing process is executed using a nozzle row without performing the nozzle distribution process. The low discharge amount range may be, for example, 80 volume% or less, 60 volume% or less, or 50 volume% or less of a normal discharge amount. The predetermined ratio may be, for example, a range of 25% or more and 75% or less, a range of 30% or more and 70% or less, or a range of 40% or more and 60% or less of the number of nozzles. When it is determined that the nozzle distribution process is required, CPU 21 starts the nozzle distribution process to generate nozzle distribution data (S150). In parallel with the process of generating the nozzle distribution data, CPU 21 executes the processes of S160 and the subsequent steps. Further, CPU 21 executes the nozzle distribution process in order from lowermost cross-sectional data 71 so that the printing process can be started as early as possible.

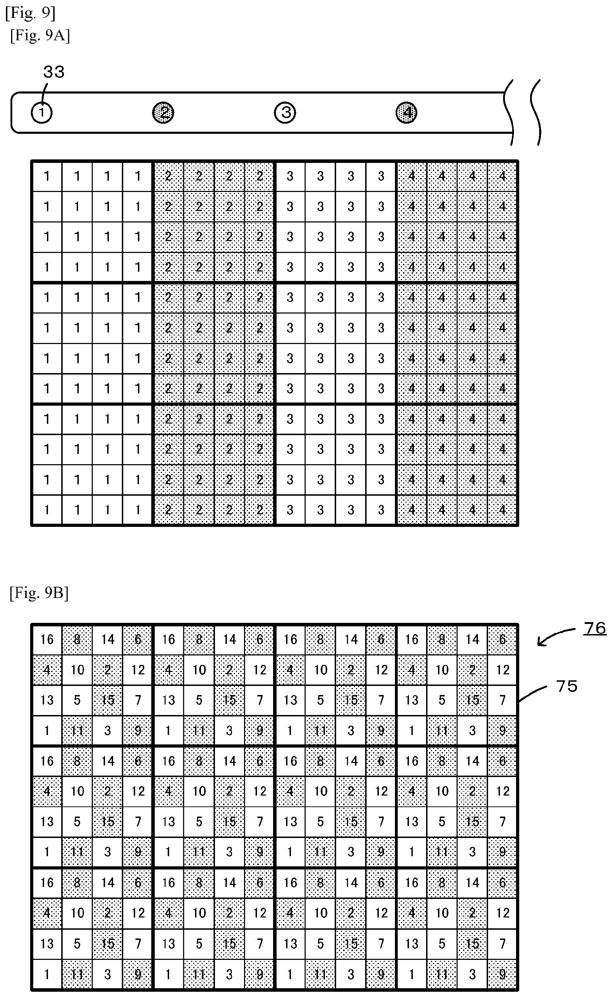

Figs. 9A and 9B are diagrams illustrating an example of an outline of the nozzle distribution process, Fig. 9A is an example in which the nozzle distribution process is not executed, and Fig. 9B is an example in which the nozzle distribution process is executed. Figs. 9A and 9B illustrate a case where the head print resolution is lower than the print request resolution, and an example in which the resolution is further enhanced by discharging the liquid material to block 75 of 4 × 4 dots. The nozzle distribution process can be applied even when block 75 is not used, for example, by using different nozzles in a vertical line. Numerals included in each dot in Figs. 9A and 9B indicate the nozzle numbers. As illustrated in Fig. 9A, when the liquid material is discharged to same block 75 using the nozzle numbers # 1 and # 3 with a small ink discharge amount, a region with a clearly smaller amount of liquid than the other regions ends up being formed. In the nozzle distribution process, since nozzle distribution data 76 is generated as image data in which the nozzles are distributed so that the liquid material is discharged to one block 75 by the multiple nozzles, as illustrated in Fig. 9B, the discharge amount of the liquid material in one block 75 is distributed, whereby it is possible to more appropriately execute the printing process.

After S150 or when the nozzle distribution process is not to be executed in S140, CPU 21 determines whether the block division process is required based on a relationship between the print request resolution and the head print resolution (S160). CPU 21 may determine that the block division process is required, for example, when the head print resolution is lower than the print request resolution, specifically, when the head print resolution is 1/2 or less of the print request resolution. Examples of the case include a case that the print request resolution is 600 DPI in both the XY directions, and the head print resolution is 150 DPI in both the XY directions. When the block division process is required, CPU 21 starts the block division process and generates block division data (S170). CPU 21 executes the block division process using the parameters received in S130. In parallel with the process of generating the block division data, CPU 21 executes the processes of S180 and the subsequent steps. In addition, CPU 21 executes the block division process in order from lowermost cross-sectional data 71 so that the printing process can be started as early as possible.

Figs. 10A to 10C are diagrams illustrating an example of an outline of the block division process, Fig. 10A is a diagram of block division data 74 of first discharge of a first pass, Fig. 10B is a diagram of block division data 74 of second discharge, and Fig. 10C is a diagram of block division data 74 of third discharge. Figs. 10A to 10C illustrate an example in which, in the case where the print request resolution is 600 DPI in both the XY directions and the head print resolution is 150 DPI in both the XY directions, the resolution is further enhanced by discharging the liquid material to block 75 of 4 × 4 dots. In Figs. 10A to 10C, numerals included in each dot in Figs. 10A to 10C indicate the discharge order. Figs. 10A to 10C illustrate a part of the print image. As illustrated in Fig. 10A, CPU 21 causes the discharge head and pallet 50 to move finely relative to each other, and fills a gap of a nozzle pitch, thereby generating image data for discharging the liquid material with further enhanced resolution. When the block division process is performed, image data corresponding to the number of divisions of the block is generated.

After S170, or when the block division process is not to be executed in S160, CPU 21 determines whether the nozzle omission correction process is required based on whether there is a discharge failure nozzle in the discharge inspection result (S180). CPU 21 executes the printing process without using the discharge failure nozzle. In this case, since omission of the liquid material occurs at a position of the discharge failure nozzle, CPU 21 executes the nozzle omission correction process and generates image data for correcting the result. In three-dimensional printer 11, the nozzle omission correction process may be started before the printing process since information on the position of the discharge failure nozzle is obtained in advance. When the nozzle omission correction process is required, CPU 21 starts the nozzle omission correction process and generates nozzle omission correction data (S190). CPU 21 acquires the position of the discharge failure nozzle included in the nozzle setting information stored in S380, and generates correction image data using the substitute nozzle. In parallel with the process of generating the nozzle omission correction data, CPU 21 executes the processes of S200 and subsequent steps. Further, CPU 21 executes the nozzle omission correction process in order from lowermost cross-sectional data 71 so that the printing process can be started as early as possible. The image data generated by executing the predetermined process up to S190 corresponds to the print data that is printable with three-dimensional printer 11.

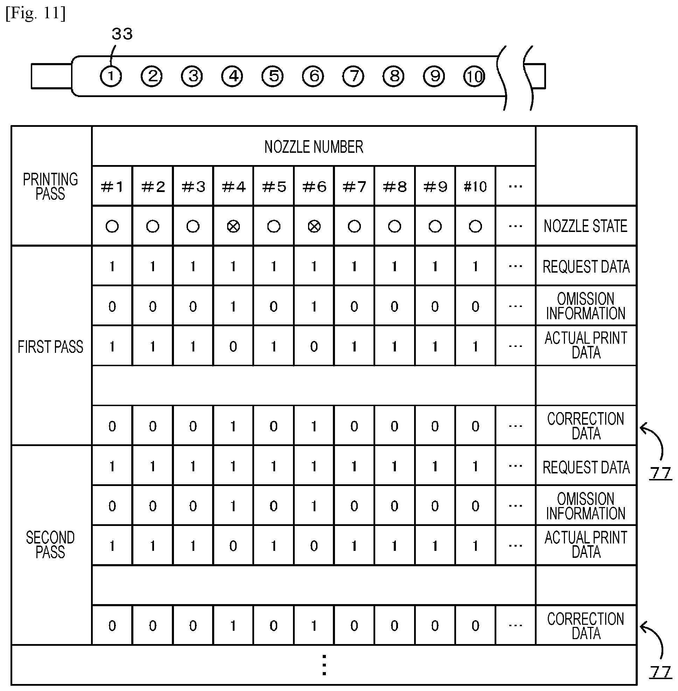

Fig. 11 is a diagram illustrating an example of an outline of the nozzle omission correction process. As illustrated in Fig. 11, when the nozzle numbers # 4, # 6, and the like are discharge failure nozzles, CPU 21 executes the printing process using another substitute nozzle without using the nozzles. After acquiring the state of each nozzle, CPU 21 specifies a nozzle from which a liquid body is to be discharged in a current printing pass, and when the nozzle is a discharge failure nozzle, generates nozzle omission correction data 77 for discharging the liquid material using the substitute nozzle. When the nozzle omission correction process is performed, image data corresponding to the presence of the discharge failure nozzle is additionally generated.

Subsequently, CPU 21 determines whether at least one piece of printable print data is generated. First, CPU 21 determines that printable print data is generated when image data subjected to all the required predetermined processes is generated on lowermost cross-sectional data 71. CPU 21 determines that the printable print data is generated each time the image data subjected to all the required predetermined processes is generated on cross-sectional data 71 of a next layer or later. When the printable print data is not generated, CPU 21 waits while continuously executing the required predetermined processes in parallel. On the other hand, when the printable print data is generated, CPU 21 starts the printing process using the print data (S210). CPU 21 executes all the required predetermined processes, and executes the printing process in parallel while generating the next print data.

Here, the printing process will be described. CPU 21 reads and acquires the nozzle setting information of first process section 30 and second process section 40 from storage section 23, forms the three-dimensional object on pallet 50 using first process section 30, and forms the circuit pattern on the three-dimensional object with second process section 40 based on the print data. CPU 21 first causes pallet 50 to be conveyed and fixed to a working position of first process section 30 by conveyance process section 27, and controls first discharge head 32 and conveyance process section 27. Further, CPU 21 causes a resin as the liquid material to be discharged onto pallet 50 based on the print data of first region 53 and the print data of second region 54 such that the resin has a predetermined shape included in shaping information 24. In this case, CPU 21 causes first nozzle 33 determined in the nozzle distribution process to discharge the liquid material according to the discharge position and the discharge order determined in the block division process. Further, after causing the liquid material to be discharged from the nozzle other than the discharge failure nozzle among first nozzles 33 without using the discharge failure nozzle, CPU 21 causes pallet 50 to move as required, and causes the liquid material to be discharged from the substitute nozzle based on the nozzle omission correction data. Next, CPU 21 causes pallet 50 to move to solidification process section 35 and cause the resin to be solidified. CPU 21 continuously executes the printing process when the printing process in first process section 30 is not completed, and causes pallet 50 to move to second process section 40 to execute the formation of the circuit pattern on the three-dimensional object when the printing process in first process section 30 is completed. In this way, three-dimensional printer 11 repeats the discharge process and the solidification process to form the three-dimensional object on pallet 50 in first region 53 and second region 54. Also in second process section 40, it is possible to form the circuit pattern on the three-dimensional object through the same process as that of first process section 30 described above.

After S210, CPU 21 determines whether there is still data to be subjected to the predetermined processes next (S220), and executes the processes of S240 and the subsequent steps and continues the predetermined processes without further actions when there is data to be subjected to the predetermined processes. The predetermined processes include nozzle distribution process, the block division process, the nozzle omission correction process, and the like. On the other hand, when there is no data to be subjected to the predetermined processes, CPU 21 ends the predetermined processes, and ends the process of generating the print data (S230). After S230, CPU 21 determines whether the printing process has ended (S240), and continuously executes the processes of S200 and the subsequent steps when the printing process has not ended. On the other hand, when the printing process has ended in S240, CPU 21 determines whether the production process of production system 10 has ended (S250). CPU 21 executes the processes of S100 and the subsequent steps when the production process has not ended, and end the routine when the production process has ended. As described above, in production system 10, the generation of the print data is shared by host device 60 and three-dimensional printer 11, and the printing process is executed in parallel with the process of generating the print data.

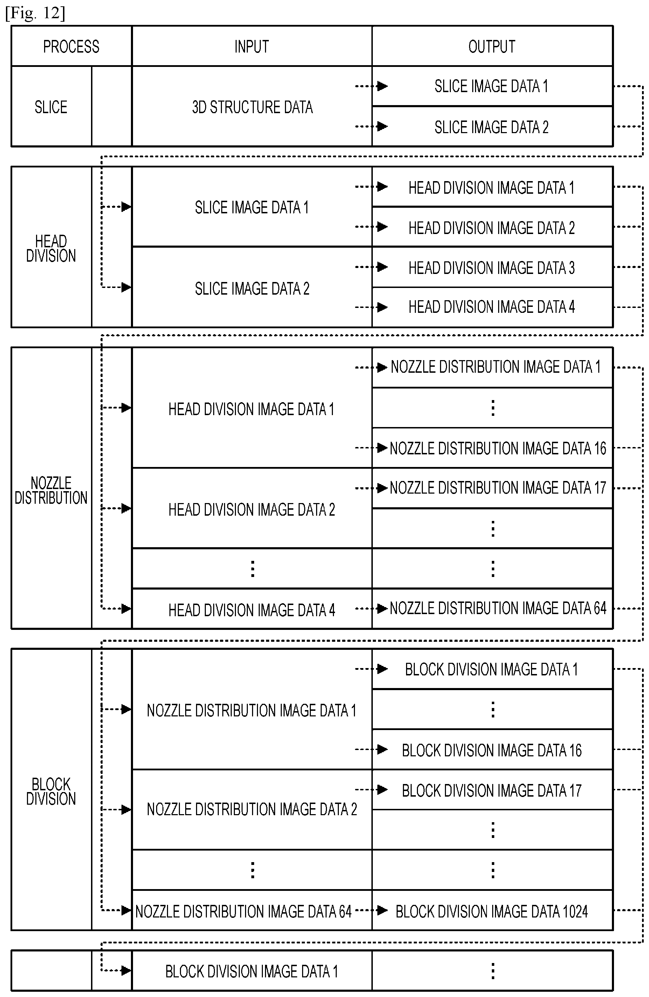

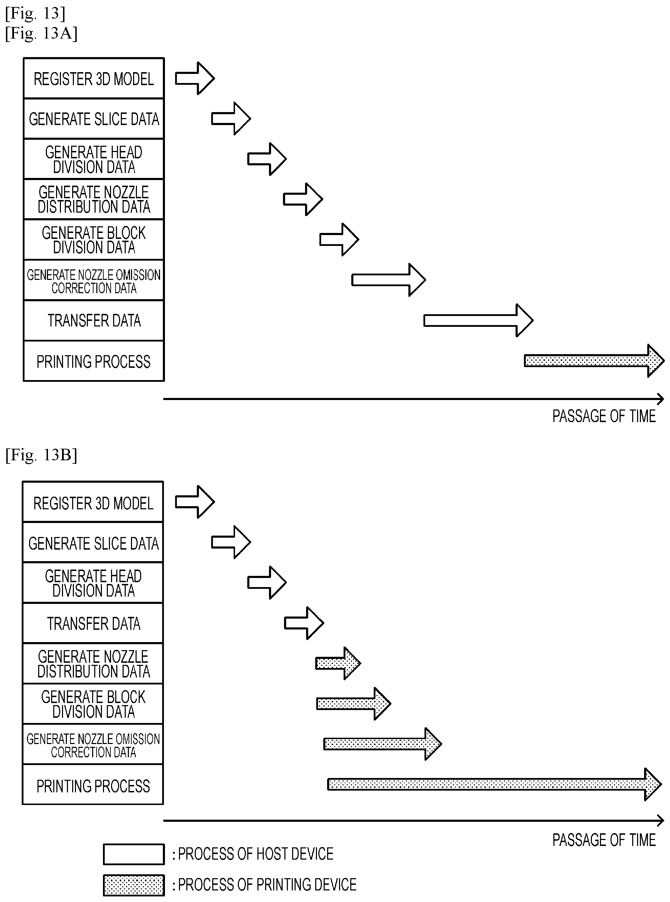

Fig. 12 is a diagram illustrating an example of the image data generated by each predetermined process. Figs. 13A and 13B are diagrams illustrating an example of passage of time from the generation of the print data to the printing process, Fig. 13A is a diagram of a case where only host device 60 performs the generation of the print data, and Fig. 13B is a diagram of a case where host device 60 and three-dimensional printer 11 shares the generation of the print data. In Fig. 12, for convenience, an example in which two pieces of cross-sectional data 71 (slice image data) are generated is made, but multiple (hundreds or more of) pieces of cross-sectional data 71 are generated in practice. As illustrated in Fig. 12, many pieces of image data are generated from the 3D structure data through a predetermined process. In addition, in production system 10, from the viewpoint of efficiency, host device 60 collectively executes a process of generating image data such as print data, and three-dimensional printer 11 exclusively executes the printing process (refer to Fig. 13A). However, as illustrated in Fig. 12, when the image data is generated through many predetermined processes, as illustrated in Fig. 13A, in three-dimensional printer 11, a time of a data generation process and a transfer time thereof are longer, and a problem arises that a long waiting time is required until the start of the printing process. In particular, when image data of a large number of three-dimensional printers 11 are generated by small number of host devices 60, the problem is remarkable. In production system 10, as illustrated in Fig. 13B, by sharing the generation of print data between host device 60 and three-dimensional printer 11, the transfer time of the print data is shortened, and a time of the entire printing process is shortened by performing the print data generation and the printing process in parallel.

Here, a correspondence relationship between the elements of the present embodiment and the elements of the present disclosure will be clarified. First discharge head 32 and second discharge head 42 of the present embodiment are examples of a discharge head, printing control section 20 is an example of a printing control section, host control section 61 is an example of a host control section, the slice process and the head division process are examples of the predetermined process in host device 60, and the nozzle distribution process, the block division process, and the nozzle omission correction process are examples of the predetermined process in three-dimensional printer 11. In the present embodiment, a printing system or a method for controlling a printing device according to the present disclosure is clarified by describing an operation of production system 10.

Three-dimensional printer 11 of the present embodiment described above is used in a printing system including host device 60 that transmits information related to shaping of the three-dimensional object via an electric communication line and executes the three-dimensional shaping process. Three-dimensional printer 11 includes the discharge head configured to discharge the liquid material for shaping the three-dimensional object, and printing control section 20 configured to acquire, after host device 60 generates cross-sectional data 71 of the three-dimensional object, the intermediate data based on cross-sectional data 71 transmitted from host device 60, generate one or more pieces of print data based on one or more predetermined processes by using the acquired intermediate data, and cause the discharge head to execute the three-dimensional shaping process based on the generated print data. In three-dimensional printer 11, since the host device generates the intermediate data based on cross-sectional data 71 and the printing device executes the subsequent processes, it is possible to further shorten the transfer time of the print data. In three-dimensional printer 11, since the process is shared, it is possible to further reduce the load on host device 60. Therefore, in three-dimensional printer 11, it is possible to further increase efficiency and further shorten a process time.

In addition, printing control section 20 executes one or more predetermined processes of the block division process of dividing the print data of the print request resolution into the print data of the head print resolution, the nozzle distribution process of reducing an in-plane variation in print quality, and the nozzle omission correction process of causing a substitute nozzle to discharge the liquid material in place of the discharge failure nozzle, and generates the print data. In three-dimensional printer 11, since it is possible to further shorten the transfer time of a large number of pieces of the print data generated by the block division process, the nozzle distribution process, the nozzle omission correction process, and the like, it is possible to further increase the efficiency and further shorten the process time.

Further, printing control section 20 executes the predetermined processes in parallel with the execution of the three-dimensional shaping process by the discharge head to generate the print data. In three-dimensional printer 11, since it is possible to address the generation of the print data and the three-dimensional shaping process in parallel, it is possible to start the three-dimensional shaping process earlier, for example, than a case where the print data is transferred after all the processes are performed by host device 60, and as a result, it is possible to further shorten the process time. In addition, printing control section 20 executes the inspection process of inspecting the discharge state of the nozzle before the three-dimensional shaping process and/or during the three-dimensional shaping process, executes the predetermined processes based on the discharge state, and generates the print data. In three-dimensional printer 11, since it is possible to execute the three-dimensional shaping process using the inspection result obtained by inspecting the discharge state of the nozzle, it is possible to more reliably obtain the printing result.

Since production system 10 including the printing system includes three-dimensional printer 11 described above, it is possible to further increase the efficiency and further shorten the process time. Further, first discharge head 32 has a width shorter than a width of three-dimensional shaping region 51, and divides three-dimensional shaping region 51 into two or more regions to execute the three-dimensional shaping process, and host control section 61 generates head division data 72 and 73 in which the three-dimensional shaping region is divided into two or more regions with respect to cross-sectional data 71, and transfers head division data 72 and 73 as the intermediate data to three-dimensional printer 11. In production system 10, since the processes up to the generation of the head division data 72 and 73 are executed by host device 60, it is possible to more appropriately perform process sharing.

It should be noted that the printing device, the printing system, and the method for controlling a printing device of the present disclosure are not limited to any of the above-described embodiment, and may be achieved in various manners as long as they fall within a technical scope of the present disclosure.

For example, in the above-described embodiment, the predetermined processes of generating the print data includes the block division process, the nozzle distribution process, and the nozzle omission correction process, but the present disclosure is not particularly limited thereto, and one or two processes of these may be omitted, another process may be included instead of or in addition to any one of these. Three-dimensional printer 11 can also perform the process sharing.

In the above-described embodiment, the predetermined processes are executed in parallel with the execution of the three-dimensional shaping process by first discharge head 32 to generate the print data, but the present disclosure is not particularly limited thereto, and the process executed in parallel may be omitted. Even in three-dimensional printer 11, it is possible to shorten the transfer time of the image data.

In the above-described embodiment, CPU 21 executes the discharge inspection before the three-dimensional shaping process, but this may be omitted. CPU 21 executes the predetermined processes using the discharge inspection result, but this may be omitted. It is more preferable that three-dimensional printer 11 executes the discharge inspection and the predetermined processes are executed using an inspection result thereof, in consideration of the suitability of the three-dimensional shaping process.

In the above-described embodiment, host control section 61 executes the slice process and the head division process, but the present invention is not limited thereto, the head division process may be omitted, and another process, for example, the block division process or the nozzle distribution process is added to the processes executed by host control section 61, in consideration of the processing balance between printing control section 20 and host control section 61.

In the above-described embodiment, production system 10 has been described, but the present disclosure is not particularly limited thereto, and a configuration only with the printing system may be adopted. In the above-described embodiment, production system 10 and three-dimensional printer 11 are provided, but the method for controlling a printing device or a program thereof may be provided.

The present disclosure may be configured as follows. For example, the method for controlling a printing device according to the present disclosure is
a method for controlling a printing device for use in a printing system including a host device configured to transmit information related to shaping of a three-dimensional object via an electric communication line, the printing device including a discharge head configured to discharge a liquid material for shaping the three-dimensional object, the printing device being configured to cause a computer to execute a three-dimensional shaping process, the method includes:
(a) a step of acquiring, after the host device generates cross-sectional data of the three-dimensional object, intermediate data based on the cross-sectional data transferred from the host device;
(b) a step of generating one or more pieces of print data based on one or more predetermined processes by using the acquired intermediate data; and
(c) a step of causing the discharge head to execute the three-dimensional shaping process based on the generated print data.

As with the above-described printing device, with the method for controlling a printing device, it is possible to further increase the efficiency and further shorten the process time. It should be noted that various modes of the above-described printing device may be employed in the method for controlling a printing device, and a step for achieving each function of the above-described printing device may be added.

In the present description, a technical idea in which "the printing device according to Claim 1 or 2" in Claim 4 at the beginning of the application is changed to "the printing device according to any one of Claims 1 to 3", and a technical idea in which "the printing device according to Claim 1 or 2" in Claim 5 at the beginning of the application is changed to "the printing device according to any one of Claims 1 to 4" have also been disclosed.

### Industrial Applicability

The present disclosure can be used in the technical field of a device for producing a product by discharging a liquid material.

### Reference Signs List

10: production system, 11: three-dimensional printer, 15: mounting device, 20: printing control section, 21: CPU, 23: storage section, 24: shaping information, 25: circuit information, 26: print data, 27: conveyance process section, 28: operation panel, 29: communication section, 30: first process section, 31: first head moving section, 32: first discharge head, 33: first nozzle, 34: first head maintenance section, 35: solidification process section, 36: planarization section, 37: cap section, 38: first supply section, 40: second process section, 41: second head moving section, 42: second discharge head, 43: second nozzle, 44: second head maintenance section, 45: heating process section, 47: cap section, 48: second supply section, 50: pallet, 51: three-dimensional shaping region, 52: disposal region, 53: first region, 54: second region, 55: sensor measurement region, 56: receiving member region, 57: discharge inspection region, 57a: allowable range, 58: fiducial mark, 59: discharge liquid material, 60: host device, 61: host control section, 62: CPU, 63: storage section, 64: shaping information, 65: circuit information, 66: intermediate data, 67: mounting information, 69: communication section, 70: three-dimensional object data, 71: cross-sectional data, 72: head division data, 73: head division data, 74: block division data, 75: block, 76: nozzle distribution data, 77: nozzle omission correction data, W: worker.

## Claims

1. A printing device for use in a printing system including a host device configured to transmit information related to shaping of a three-dimensional object via an electric communication line, the printing device being configured to execute a three-dimensional shaping process, the printing device comprising:
a discharge head configured to discharge a liquid material for shaping the three-dimensional object; and
a printing control section configured to acquire, after the host device generates cross-sectional data of the three-dimensional object, intermediate data based on the cross-sectional data transferred from the host device, generate one or more pieces of print data based on one or more predetermined processes by using the acquired intermediate data, and cause the discharge head to execute the three-dimensional shaping process based on the generated print data.

2. The printing device according to Claim 1, wherein
the printing control section generates the print data by executing the one or more predetermined processes of a block division process of block-dividing print data of print request resolution into print data of head print resolution, a nozzle distribution process of reducing an in-plane variation in print quality, and a nozzle omission correction process of causing a substitute nozzle to discharge the liquid material in place of a discharge failure nozzle.

3. The printing device according to Claim 1 or 2, wherein
the printing control section generates the print data by executing the predetermined processes in parallel with causing the discharge head to execute the three-dimensional shaping process.

4. The printing device according to Claim 1 or 2, wherein
the printing control section executes an inspection process of inspecting a discharge state of the nozzle before the three-dimensional shaping process and/or during the three-dimensional shaping process, and generates the print data by executing the predetermined processes based on the discharge state.

5. A printing system comprising:
a host device including a host control section configured to transmit information related to shaping of a three-dimensional object to the printing device via an electric communication line; and
the printing device according to Claim 1 or 2.

6. The printing system according to Claim 5, wherein
the discharge head has a width shorter than a width of a three-dimensional shaping region, and divides the three-dimensional shaping region into two or more regions to execute the three-dimensional shaping process, and
the host control section generates head division data in which the three-dimensional shaping region is divided into two or more regions with respect to the cross-sectional data, and transfers the head division data as the intermediate data to the printing device.

7. A method for controlling a printing device for use in a printing system including a host device configured to transmit information related to shaping of a three-dimensional object via an electric communication line, the printing device including a discharge head configured to discharge a liquid material for shaping a three-dimensional object, the printing device being configured to cause a computer to execute a three-dimensional shaping process, the method comprising:
(a) a step of acquiring, after the host device generates cross-sectional data of the three-dimensional object, intermediate data based on the cross-sectional data transferred from the host device;
(b) a step of generating one or more pieces of print data based on one or more predetermined processes by using the acquired intermediate data; and
(c) a step of causing the discharge head to execute the three-dimensional shaping process based on the generated print data.
